# EUROPEAN PATENT SPECIFICATION

(11) **EP 3 063 005 B1**
(45) Date of publication and mention of the grant of the patent: **26.07.2023**
(21) Application number: 14799051.9
(22) Date of filing: 31.10.2014
(51) Int. Cl.: B32B 27/40, B32B 27/42, B32B 29/00, B32B 27/20

(54) **A DECORATIVE PANEL**
ZIERBLENDE
PANNEAU DÉCORATIF

(30) Priority: 01.11.2013 NL 2011719
(43) Date of publication of application: 07.09.2016
(73) Proprietor: Trespa International B.V., 6002 SM Weert (NL)
(72) Inventor: MARQUES DA SILVA MACEDO, Isabel Maria, 6002 SM Weert (NL); HODGSON-STOKX, Marcelle, 6002 SM Weert (NL)
(74) Representative: Algemeen Octrooi- en Merkenbureau B.V.
(86) International application number: PCT/NL2014/050758
(87) International publication number: WO 2015/065191

(56) References cited:
- WO-A2-2010/064895
- WO-A2-2011/056564

## Description

The present application relates to a decorative panel comprising a core layer, a decorative layer applied to said core, and a transparent or translucent outermost layer applied to said decorative layer, said outermost layer consisting essentially of a synthetic resin.

Such decorative panels are known in the art.

International application WO2010064895 in the name of the present applicant relates to a decorative film comprising a substrate, an intermediate layer, a decorative layer and a protective layer, respectively. According to WO2010064895 the composition of the protective layer is such that the protective layer is transparent and resistant to moisture and UV radiation, wherein the decorative layer contains pigments, which are brightly coloured and at least partially transparent, and the intermediate layer optionally contains pigments, preferably in a white or light colour, and protects the substrate against the inkjet-applied layer, i.e. the creation of a closed and smooth layer on the substrate. WO2010064895 further teaches that the substrate is selected from the group consisting of a resin-impregnated paper and a resin-impregnated non-woven.

From German Offenlegungsschrift DE 34 18 282 there is known a method for manufacturing a decorative panel, wherein a decorative layer is applied to an underlay, which decorative layer comprises a mixture of radiation- polymerisable components, after which the decorative layer is irradiated and pressed together with the underlay to obtain a scratch resistance of at least about 1.5 Newton.

From U.S. Pat. No. 4,789,604 in the name of the present applicant there is known a method for manufacturing a decorative panel, in which a liquid synthetic resin layer is a applied to a substrate layer, after which a film having a surface roughness is applied to the resin layer, said surface roughness being transferred to the resin layer, after which the resin layer is polymerised by exposure to radiation. Subsequently, the resin layer and the substrate are pressed together under elevated temperature conditions.

From European patent application No. 0 338 221 there is known a radiation-curable coating, to which coating, which is based on an acrylate mixture, matting agents are added in an amount of 20 - 60 weight percentage. Setting the matting degree by means of matting agents has appeared to be difficult in practice, because the matting agents adversely affect the crosslinking reaction of the matrix material, whilst in addition the use of matting agents has an adverse effect on the scratch resistance of a coating thus obtained.

From European patent application No. 0 706 834 there is known a method for producing a substrate material provided with a UV curable lacquer consisting of a lacquer based on an acrylate mixture, a UV initiator and other usual additives.

A decorative paper or a decorative film is used for decorating plate materials, which plate materials are based mainly on resin-impregnated wood fibres. Such a decorative panel is known from U.S. Pat. No. 3,789,604 and U.S. Pat. No. 4,801,495 in the name of the present applicant.

The process of manufacturing decorative paper by impregnation with a resin, followed by a thermal treatment, is known per se, for example from European patent application EP 0 022 153 and German Patentschrift DE 217 252. The following documents can furthermore be mentioned in connection with the impregnation of decorative paper with a resin: German Offenlegungsschrifts Nos. 2 727 312; 2 903 172; 2 224 732; 3 630 315; 3 541 187; 3 329 679 and 3 024 394; European patent publication EP 1 923 211 as well as U.S. Pat. No. 7,192,543. WO 2011/056564 A2 discloses a coating composition comprising a film-forming resin, a colored and/or opaque infrared reflective pigment; and an infrared transparent pigment having a total solar reflectance of at least 15%.

The traditional process of manufacturing HPL (high-pressure laminates) and HPL compact plates is carried out in a press under elevated temperature and pressure conditions.

In the field of energy absorption it is known that IR light comprises a large percentage of the solar energy that reaches the earth surface. The more an object absorbs this energy, the greater the heat build-up and the higher the energy consumption for cooling a building in hot climates are, although one assumes that this effect doesn't influence the colour of an object.

An object of the present invention is to provide a decorative panel that reflects a significant part of the IR light without affecting the visual appearance of the surface.

Another object of the present invention is to provide a decorative panel having dark coloured surfaces that typically absorb sunlight, being able to reflect sunlight and still keep the same colour specification.

Another object of the present invention is to improve IR radiation reflectivity of HPL uni-colours panels.

The present invention thus relates to a decorative panel comprising a core layer, a decorative layer applied to said core, and a transparent or translucent outermost layer applied to said decorative layer, said outermost layer consisting of a synthetic resin, wherein said decorative layer is a IR reflectivity increasing layer, comprising a colored layer, wherein said colored layer is adjacent to the outermost layer and comprises pigments chosen from the group of the IR reflective type pigments and IR transmissive type pigments, or a combination thereof, wherein said IR reflectivity increasing layer further comprises both a white pigmented, synthetic resin impregnated decorative paper and a layer of a white pigmented synthetic resin, wherein said decorative paper is adjacent the core.

The present inventors found that by inserting an IR reflectivity increasing layer between the core layer and the outermost layer of a decorative panel it is possible to reflect a significant part of the IR light without affecting the visual appearance of the surface. This means that dark coloured surfaces, that typically absorb sunlight, will now be able to partly reflect sunlight and still keep the same colour specification. In addition, the present inventors found that by combining specific colour formulations, using pigments with high IR reflectivity/transmission and other reflective coatings/layers underneath the outermost coating, the IR radiation reflectivity of HPL uni-colours panels can be significantly improved. The layer construction of the decorative panel according to the present invention differs from the disclosure of International application WO2010064895 as discussed above mainly in its composition, namely pigments chosen from the group of the IR reflective type pigments and IR transmissive type pigments, or a combination thereof.

According to the present invention the IR reflectivity increasing layer further comprises both a white pigmented, synthetic resin impregnated decorative paper and a layer of a white pigmented synthetic resin, wherein said decorative paper is adjacent to the core.

The IR reflectivity increasing layer comprises a coloured layer, wherein said coloured layer is adjacent to the outermost layer.

The coloured layer comprises pigments chosen from the group of the IR reflective type pigments and IR transmissive type pigments, or a combination thereof.

It is preferred that the white pigmented, synthetic resin layer comprises titanium dioxide in an amount of 25 - 50 wt.%, on basis of the total weight of that synthetic resin layer, wherein the total layer weight of said white pigmented, synthetic resin layer is preferably in a range of 20 - 150 g/m².

According to another embodiment the white pigmented, synthetic resin impregnated decorative paper comprises a synthetic resin chosen from the group of radiation polymerizing and thermosetting resins, especially phenol formaldehyde resin or urethane acrylates.

The coloured layer comprises pigments in a radiation-polymerized synthetic resin polymer. In a preferred embodiment the amount of said pigments in said colored layer is in a range of 5-120 g/m².

The total layer weight of the present IR reflectivity increasing layer is in a range of 40-600 g/m².

The total layer weight of the present transparent or translucent outermost layer is in a range of 10 - 100 g/m².

The core layer of the present decorative panel comprises at least one material selected from the group consisting of (a) wood, (b) a plurality of sheets of paper, plastic, or metal (c) nonwoven fabric, (d) fibre mats, especially thermo pressed stack of synthetic resin impregnated fibre-containing layers, (e) thermoplastic based with mineral fibres, (f) metal sheet and (g) minerals combined with thermosetting polymer.

Examples of preferred radiation-polymerized synthetic resin polymer are at least one oligomer selected from the group consisting of an epoxy-acrylate, an epoxy-methacrylate, a silicone-acrylate, a silicone-methacrylate, a polyester acrylate, a polyester methacrylate, a urethane acrylate, and a urethane methacrylate, especially an aliphatic urethane acrylate oligomer.

The present inventors found that the Total Solar Reflectance (TSR) of the present decorative panel, in %, which is the integration of total reflectance over the sunlight spectrum (280nm - 2500nm) and calculated using reflectance values measured according to ASTM norm E903 and solar radiation values from ASTM norm G197-08, is preferably at least 28%, more preferably at least 35%, even more preferably at least 38%.

In the decorative panel according to the present invention the paper weight of the white pigmented, synthetic resin impregnated decorative paper is preferably between 20 and 300 g/m², more preferably between 60 and 260 g/m², based on the total weight of the synthetic resin impregnated decorative paper.

In a preferred embodiment of the present decorative panel examples of the IR reflective type pigments are Kronos White 2220 (manufactured by Kronos), Heucodur Yellow 156 (manufactured by Heubach) and Titanorange 6994 (manufactured by Broll), or a combination thereof.

In another preferred embodiment of the present decorative panel examples of the IR transmissive type pigments are Paliogen Black L0086 (manufactured by BASF), Irgazin Red BO (manufactured by BASF), Cinquasia Violet RT201 (manufactured by BASF) and Paliogen Blue 6385 (manufactured by BASF), or a combination thereof.

It is preferred that the presence of IR absorbing type pigments in the color layer is less than 5 g/m², wherein examples of the IR absorbing type pigments are Carbon Black 1020 (manufactured by Columbia Chemicals), Brown Bayferrox 645T (manufactured by Lanxess), Bayferrox Red 110 (manufactured by Lanxess), or a combination thereof.

The increase of IR reflectivity in a façade HPL panel according to the present invention makes the surface temperature of the panel decrease which means that less heat is transferred into the building. In hot climates this translates into a decrease of energy consumption for cooling.

HPL panels according to the present invention are produced using coatings that are radiation curable, that withstand high pressure/temperature in production processes and that resist extreme weathering conditions for at least 10 years. Such a process has been disclosed in US 4,789,604 and US 4,927,572, which documents are incorporated by reference.

The present invention is thus related with coatings that fulfill these conditions, combined with IR reflection properties for dark colours. The present invention is established on basis of the HPL technology/process, wherein the presence of dark underlayers (black core) is still effective, combined with radiation curable coatings, and the present panels find utilization in, inter alia, ventilated façade systems.

The invention will be explained in detail by means of the following examples. The percentages given are by weight.

Figure 1 shows the reflectivity (%) vs. the wavelength of several panels.

Figure 2 shows the total reflection (%) vs. wavelength of several panels.

### Examples

The present inventors manufactured several HPL panels according to the process conditions disclosed in Example 1 of US 4,927,572. The panels thus obtained can be subdivided in several individual layers, i.e. A, Core, B, White substrate paper, C, White underlayer, D, Coloured coating, and E, Top Coat.

The composition of each layer is as follows: A:Kraft paper or wood impregnated with phenol formaldehyde resin (45 g resin per 100 g paper), B: Decor paper based on 100 % chemical pulp fibres, (typically the type of wood is eucalyptus), wherein white colour is obtained by using titanium dioxide (30 g titanium dioxide per 100 g paper), and paper is impregnated with phenol formaldehyde resin (58 g resin per 100 g paper), C: urethane acrylate resin with titanium dioxide (40 g titanium dioxide per 60 g resin), D: urethane acrylate resin with pigments formulation, and E: urethane acrylate resin.

The thickness of the core is between 2- 30 mm, preferably between 8-10 mm. The weight of B was 123 g/m², weight of C was 70 g/m², weight of D was 70 g/m², and the weight of E was 27 g/m², all weight values based on total layer weight.

In the following Table the Total Solar Reflectance (TSR) is shown for several HPL panels. This is a comparison based on Total Solar Reflectance (TSR) in % which is the integration of total reflectance over the sunlight spectrum (280nm - 2500nm) and is calculated using reflectance values measured according to ASTM norm E903 and solar radiation values from ASTM norm G197-08.

**Table**

| Panel | Construction of panel | TSR value |
|---|---|---|
| 1 | A, B, C, D, E | 36 |
| 2 | A, B, C, D, E | 5 |
| 3 | A, B, D, E | 30 |
| 4 | A, D, E | 10 |

From the table one can see that panel 1, i.e. a panel comprising all individual layers (A+B+C+D+E, wherein the pigments in layer D are of the type reflective and/or transmissive pigments), has a TSR=36, whereas panel 2, also comprising all individual layers but with a specific carbon black (Carbon Black 1020, Columbia Chemicals) shows a TSR=5. The present inventor is of the opinion that this decrease in TSR value is attributable to the specific optical properties (high absorbance of IR light) of the carbon black in the coloured layer D of panel 2. The pigments in panel 1 are Paliogen Black L0086 (BASF), Irgazin DPP red BO (BASF), Kronos White 2220 (Kronos) and Cinquasia Violet RT201D (BASF), which pigments can be qualified as IR reflective type pigments and IR transmissive type pigments. In panel 3 layer C is not present resulting in a TSR=30. In panel 4 layers B and C are not present resulting in a TSR=10.

The highest TSR value has been obtained with a panel comprising all individual layers in which the coloured layer comprises IR reflective type pigments and IR transmissive type pigments (panel 1), whereas the TSR value of a panel without layer C shows a reduction of the TSR value to a value of TSR=30.

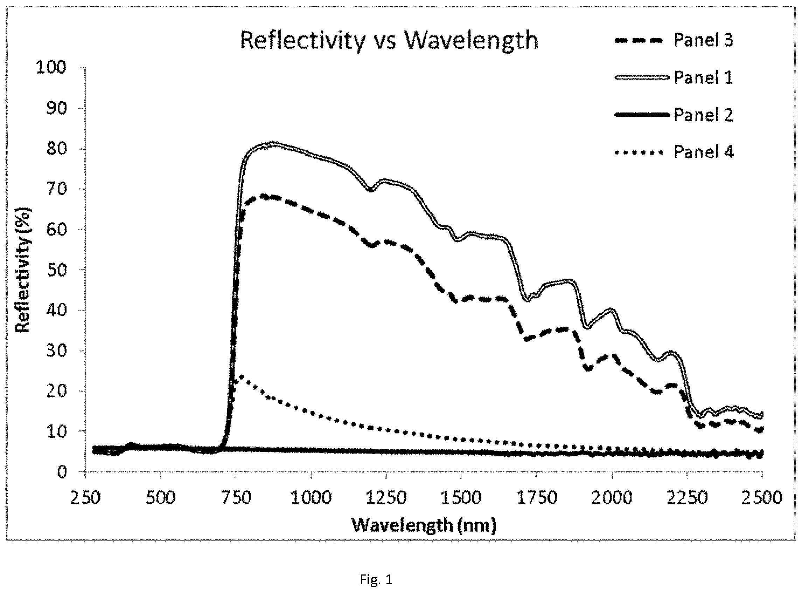

In Figure 1 the experimental results for the reflectivity vs. wavelength for each panel 1, 2, 3, and 4 can be found. These data clearly demonstrate that the panels according to the present invention show an improved IR radiation reflectivity of HPL uni-colours panels.

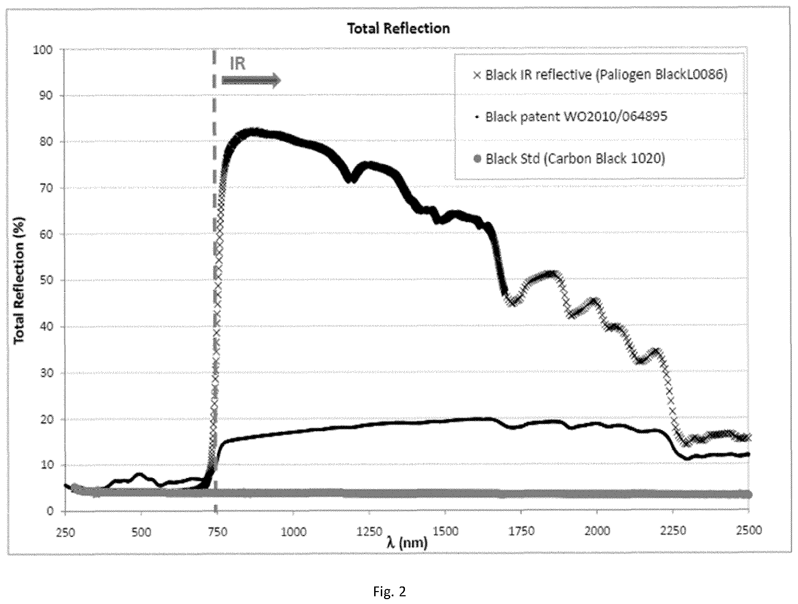

The present inventors have also conducted a reflectivity measurement for a sample with a build-up of layers according to WO2010/064895. In Figure 2 one can see this measurement and the comparison, for the similar colour, with the measurement for the present invention (IR reflection improved) and also for a standard black panel (manufactured by Trespa). From the graph shown in Figure 2 one can deduce that with the composition of the coloured layer from WO2010/064895 the reflectivity in the IR part of the spectrum is much lower than the one from the present invention.

## Claims

1. A decorative panel comprising a core layer, a decorative layer applied to said core, and a transparent or translucent outermost layer applied to said decorative layer, said outermost layer consisting of a synthetic resin, said decorative layer is a IR reflectivity increasing layer, comprising a layer of white pigmented synthetic resin and a colored layer adjacent to the outermost layer and comprising pigments chosen from the group of the IR reflective type pigments and IR transmissive type pigments, or a combination thereof, **characterized in that** said IR reflectivity increasing layer further comprises a white pigmented, synthetic resin impregnated decorative paper adjacent the core, wherein said layer of white pigmented synthetic resin is positioned between said colored layer and said white pigmented, synthetic resin impregnated decorative paper.

2. A decorative panel according to claim 1, wherein said white pigmented, synthetic resin layer comprises titanium dioxide in an amount of 25 - 50 wt.%, on basis of the total weight of said layer.

3. A decorative panel according to any one or more of the claims 1-2, wherein the total layer weight of said white pigmented, synthetic resin layer is in a range of 20 - 150 g/m².

4. A decorative panel according to any one or more of the claims 1-3, wherein said white pigmented, synthetic resin impregnated decorative paper comprises a synthetic resin chosen from the group of radiation polymerizing and thermosetting resins, especially phenol formaldehyde resin or urethane acrylates.

5. A decorative panel as claimed in any one of the claims 1-4, wherein said colored layer comprises said pigments in a radiation-polymerized synthetic resin polymer, wherein the amount of said pigments in said colored layer is preferably in a range of 5-120 g/m².

6. A decorative panel according to any one of the preceding claims, wherein the total layer weight of said IR reflectivity increasing layer is in a range of 40-600 g/m², wherein the total layer weight of said transparent or translucent outermost layer is preferably in a range of 10 - 100 g/m².

7. A decorative panel as claimed in any one of the preceding claims, wherein said core layer comprises at least one material selected from the group consisting of (a) wood, (b) a plurality of sheets of paper, plastic, or metal (c) nonwoven fabric, (d) fibre mats, especially thermo pressed stack of synthetic resin impregnated fibre-containing layers, (e) thermoplastic based with mineral fibres, (f) metal sheet and (g) minerals combined with thermosetting polymer.

8. A decorative panel as claimed in any one of the claims 5-7, wherein said radiation-polymerized synthetic resin polymer comprises at least one oligomer selected from the group consisting of an epoxy-acrylate, an epoxy-methacrylate, a silicone-acrylate, a silicone-methacrylate, a polyester acrylate, a polyester methacrylate, a urethane acrylate, and a urethane methacrylate, especially an aliphatic urethane acrylate oligomer.

9. A decorative panel as claimed in any one of the preceding claims, wherein the Total Solar Reflectance (TSR) of said decorative panel, in %, which is the integration of total reflectance over the sunlight spectrum (280nm - 2500nm) and calculated using reflectance values measured according to ASTM norm E903 and solar radiation values from ASTM norm G197-08, is at least 28%, preferably at least 35%, more preferably at least 38%.

10. A decorative panel according to any one of the preceding claims, wherein the paper weight of said white pigmented, synthetic resin impregnated decorative paper is between 20 and 300 g/m², preferably between 60 and 260 g/m², based on the total weight of the synthetic resin impregnated decorative paper.

## Patentansprüche

1. Zierblende, umfassend eine Kernschicht, eine auf den Kern aufgebrachte Zierschicht und eine auf die Zierschicht aufgebrachte transparente oder transluzente äußerste Schicht, wobei die äußerste Schicht aus einem synthetischen Harz besteht, wobei die Zierschicht eine das IR-Reflexionsvermögen erhöhende Schicht ist, und eine Schicht aus weiß pigmentiertem synthetischem Harz und eine farbige Schicht umfasst, die an die äußerste Schicht angrenzt und Pigmente umfasst, die ausgewählt sind aus der Gruppe aus den Pigmenten des IR-reflektierenden Typs und Pigmenten des IR-transmissiven Typs oder einer Kombination davon, **dadurch gekennzeichnet, dass** die das IR-Reflexionsvermögen erhöhende Schicht ferner ein weiß pigmentiertes, mit synthetischem Harz getränktes Zierpapier umfasst, das an den Kern angrenzt, wobei die Schicht aus weiß pigmentiertem synthetischem Harz zwischen der farbigen Schicht und dem weiß pigmentierten, mit synthetischem Harz getränkten Zierpapier angeordnet ist.

2. Zierblende nach Anspruch 1, wobei die Schicht aus weiß pigmentiertem, synthetischem Harz Titandioxid in einer Menge von 25-50 Gew.-%, bezogen auf das Gesamtgewicht der Schicht, umfasst.

3. Zierblende nach einem oder mehreren der Ansprüche 1-2, wobei das Gesamtschichtgewicht der Schicht aus weiß pigmentiertem, synthetischem Harz in einem Bereich von 20-150 g/m² liegt.

4. Zierblende nach einem oder mehreren der Ansprüche 1-3, wobei das weiß pigmentierte, mit synthetischem Harz getränkte Zierpapier ein synthetisches Harz umfasst, das ausgewählt ist aus der Gruppe aus strahlungspolymerisierendem und duroplastischem Harz, insbesondere Phenolformaldehydharz oder Urethanacrylaten.

5. Zierblende nach einem der Ansprüche 1-4, wobei die farbige Schicht Pigmente in einem strahlungspolymerisierten synthetischen Harzpolymer umfasst, wobei die Menge der Pigmente in der farbigen Schicht vorzugsweise in einem Bereich von 5-120 g/m² liegt.

6. Zierblende nach einem der vorstehenden Ansprüche, wobei das Gesamtschichtgewicht der das IR-Reflexionsvermögen erhöhenden Schicht in einem Bereich von 40-600 g/m² liegt, wobei das Gesamtschichtgewicht der transparenten oder transluzenten äußersten Schicht vorzugsweise in einem Bereich von 10-100 g/m² liegt.

7. Zierblende nach einem der vorstehenden Ansprüche, wobei die Kernschicht mindestens ein Material umfasst, das ausgewählt ist aus der Gruppe bestehend aus (a) Holz, (b) einer Mehrzahl von Lagen aus Papier, Kunststoff oder Metall, (c) Vliesstoff, (d) Fasermatten, insbesondere thermogepresste Stapel von mit synthetischem Harz getränkten, faserhaltigen Schichten, (e) Thermoplaste auf Mineralfaserbasis, (f) Metalllage und (g) Mineralen in Kombination mit duroplastischem Polymer.

8. Zierblende nach einem der Ansprüche 5-7, wobei das strahlungspolymerisierte synthetische Harzpolymer mindestens ein Oligomer umfasst, das ausgewählt ist aus der Gruppe bestehend aus einem Epoxidacrylat, einem Epoxidmethacrylat, einem Silikonacrylat, einem Silikonmethacrylat, einem Polyesteracrylat, einem Polyestermethacrylat, einem Urethanacrylat und einem Urethanmethacrylat, insbesondere einem aliphatischen Urethanacrylatoligomer.

9. Zierblende nach einem der vorstehenden Ansprüche, wobei das totale solare Reflexionsvermögen (TSR) der Zierblende in %, das die Integration des gesamten Reflexionsvermögens im Sonnenlichtspektrum (280 nm - 2500 nm) ist und unter Verwendung von Reflexionswerten, die gemäß ASTM-Standard E903 gemessen werden, und Solarstrahlungswerten gemäß ASTM-Standard G197-08 berechnet wird, mindestens 28 %, vorzugsweise mindestens 35 %, besonders bevorzugt mindestens 38 % beträgt.

10. Zierblende nach einem der vorstehenden Ansprüche, wobei das Papiergewicht des weiß pigmentierten, mit synthetischem Harz getränkten Zierpapiers zwischen 20 und 300 g/m², vorzugsweise zwischen 60 und 260 g/m², bezogen auf das Gesamtgewicht des mit synthetischem Harz getränkten Zierpapiers, beträgt.

## Revendications

1. Panneau décoratif comprenant une couche noyau, une couche décorative appliquée audit noyau, et la couche la plus externe transparente ou translucide appliquée à ladite couche décorative, ladite couche la plus externe étant constituée d'une résine synthétique, ladite couche décorative est une couche augmentant la réflectivité IR, comprenant une couche de résine synthétique pigmentée blanche et une couche colorée adjacente à la couche la plus externe et comprenant des pigments choisis dans le groupe des pigments du type réfléchissant les IR et des pigments du type transmettant les IR, ou une combinaison de ceux-ci, **caractérisé en ce que** ladite couche augmentant la réflectivité IR comprend en outre un papier décoratif imprégné de résine synthétique pigmentée blanche adjacent au noyau, où ladite couche de résine synthétique pigmentée blanche est positionnée entre ladite couche colorée et ledit papier décoratif imprégné de résine synthétique pigmentée blanche.

2. Panneau décoratif selon la revendication 1, dans lequel ladite couche de résine synthétique pigmentée blanche comprend du dioxyde de titane en une quantité allant de 25 à 50% en poids, par rapport au poids total de ladite couche.

3. Panneau décoratif selon l'une quelconque ou plusieurs des revendications 1 et 2, dans lequel le poids total de couche de ladite couche de résine synthétique pigmentée blanche se trouve dans une plage allant de 20 à 150 g/m².

4. Panneau décoratif selon l'une quelconque ou plusieurs des revendications 1 à 3, dans lequel ledit papier décoratif imprégné de résine synthétique pigmentée blanche comprend une résine synthétique choisie dans le groupe des résines polymérisant par rayonnement et thermodurcissables, en particulier une résine phénol-formaldéhyde ou des uréthane-acrylates.

5. Panneau décoratif tel que revendiqué dans l'une quelconque des revendications 1 à 4, dans lequel ladite couche colorée comprend lesdits pigments dans un polymère de résine synthétique polymérisée par rayonnement, dans lequel la quantité desdits pigments dans ladite couche colorée se trouve de préférence dans une plage allant de 5 à 120 g/m².

6. Panneau décoratif selon l'une quelconque des revendications précédentes, dans lequel le poids total de couche de ladite couche augmentant la réflectivité IR se trouve dans une plage allant de 40 à 600 g/m², dans lequel le poids total de couche de ladite couche la plus externe transparente ou translucide se trouve de préférence dans une plage allant de 10 à 100 g/m².

7. Panneau décoratif tel que revendiqué dans l'une quelconque des revendications précédentes, dans lequel ladite couche noyau comprend au moins un matériau choisi dans le groupe constitué de (a) bois, (b) une pluralité de feuilles de papier, de plastique ou de métal (c) tissu non tissé, (d) mats de fibres, en particulier empilement thermopressé de couches contenant des fibres imprégnées de résine synthétique, (e) thermoplastique à base de fibres minérales, (f) tôle métallique et (g) minéraux combinés à un polymère thermodurcissable.

8. Panneau décoratif tel que revendiqué dans l'une quelconque des revendications 5 à 7, dans lequel ledit polymère de résine synthétique polymérisée par rayonnement comprend au moins un oligomère choisi dans le groupe constitué d'un époxy-acrylate, d'un époxy-méthacrylate, d'un silicone-acrylate, d'un silicone-méthacrylate, d'un polyester-acrylate, d'un polyester-méthacrylate, d'un uréthane-acrylate, et d'un uréthane-méthacrylate, en particulier un oligomère d'uréthane-acrylate aliphatique.

9. Panneau décoratif tel que revendiqué dans l'une quelconque des revendications précédentes, dans lequel la Réflectance Solaire Totale (TSR) dudit panneau décoratif, en %, qui est l'intégration de la réflectance totale sur le spectre de la lumière du soleil (280 nm - 2500 nm) et calculée en utilisant les valeurs de réflectance mesurées selon la norme ASTM E903 et les valeurs de rayonnement solaire de la norme ASTM G197-08, est d'au moins 28%, de préférence d'au moins 35%, plus préférablement d'au moins 38%.

10. Panneau décoratif selon l'une quelconque des revendications précédentes, dans lequel le poids de papier dudit papier décoratif imprégné de résine synthétique pigmentée blanche est compris entre 20 et 300 g/m², de préférence entre 60 et 260 g/m², par rapport au poids total du papier décoratif imprégné de résine synthétique.
